# EUROPÄISCHE PATENTSCHRIFT

(11) **EP 0 940 649 B1**
(45) Veröffentlichungstag und Bekanntmachung des Hinweises auf die Patenterteilung: **27.12.2006**
(21) Anmeldenummer: 99810176.0
(22) Anmeldetag: 02.03.1999
(51) Int. Cl.: G01B 3/00, G01B 3/02, G01B 3/20, G01D 13/20

(54) **Messgerät mit optischem Skalenableseverfahren**
Measuring device with optical scale reading method
Dispositif de mesure avec procédé de lecture optique de l'échelle

(30) Priorität: 06.03.1998 CH 54098
(43) Veröffentlichungstag der Anmeldung: 08.09.1999
(73) Patentinhaber: Kunststoffwerk AG Buchs, 9470 Buchs (CH)
(72) Erfinder: Walser, Werner, 9472 Grabs (CH)
(74) Vertreter: Kulhavy, Sava

(56) Entgegenhaltungen:
- DE-A- 3 035 435
- GB-A- 891 393
- US-A- 1 415 627
- US-A- 4 257 164
- US-A- 5 101 569
- PATENT ABSTRACTS OF JAPAN vol. 1995, no. 11, 26. Dezember 1995 (1995-12-26) -& JP 07 198301 A (KYOIKU SHUPPAN KK;OTHERS: 01), 1. August 1995 (1995-08-01)

## Beschreibung

Die vorliegende Erfindung betrifft ein Messgerät mit zumindest einer Einrichtung zur optischen Ermittlung von Messwerten, wobei diese Messeinrichtung einen Träger für zumindest eine Skala umfasst, welcher aus einem durchsichtigen Material ist und welcher eine untere Hauptfläche und eine obere Hauptfläche aufweist.

Ein Messgerät dieser Gattung ist in JP 07 198301, Patent Abstract of Japan, vol. 1995, no. 11 publiziert. Dieses Messgerät umfasst eine flächenhafte Basis aus einem durchsichtigen oder halbdurchsichtigen Material, eine Anzeigevorrichtung mit einer Gradeinteilung sowie einen Diskriminator. Dieser Diskriminator ist der Basis zugeordnet. Die Anzeigevorrichtung mit der Gradeinteilung umfasst eine Schicht aus einem Harz, deren Unterseite eine reflektierende Schicht zugeordnet ist. Die Unterseite dieser reflektierenden Schicht ist mit einer Schutzschicht abgedeckt. Dieses Messgerät dient zur Messung der Unebenheiten der Oberfläche von Gegenständen.

In US 5,101,569 ist ein einstellbares Messgerät zur Identifizierung von Autofelgen offenbart. Dieses Gerät weist ein Lineal mit Skalen sowie einen Schieber mit Ablesemarken auf, welcher am Lineal gleitbar angebracht ist. Ein erster bolzenförmiger Abtastfinger ist an einer der Endpartien des Lineals befestigt. Ein zweiter bolzenförmiger Abtastfinger ist am Schieber angebracht. Das Lineal kann aus einem durchsichtigen Material sein. Der Durchmesser der mittleren Öffnung in einer Felge kann so gemessen werden, dass die Stirnfläche des einen Endes des Lineals an der Innenkante des Mittelloches angeschlagen wird, während die gegenüberliegende Seitenkante des Schiebers an der gegenüber liegenden Stelle des Mittelloches angeschlagen wird. Der Abstand der Bolzenlöcher in der Felge wir in der Weise gemessen, dass die kegelstumpfförmigen Spitzen der Abtastfinger in zwei benachbarte Bolzenlöcher gesteckt werden. Ein solches Messgerät ist zu einer genauen Messung von Längen ebenfalls ungeeignet.

In US 4,257,164 ist ein Gerät zur Messung von Winkeln zwischen einer Visierlinie und der Normale zu einer planen Oberfläche offenbart. Dieses Gerät ist zu einer genauen Messung von Längen ebenfalls ungeeignet.

In GB 1,415,626 ist eine Schieblehre offenbart. Der Balken dieser Schieblehre trägt ein durchsichtiges Glied, welches mit einer Anzahl von schräg verlaufenden Linien versehen ist. Der Schieber umfasst eine durchsichtige Platte, welche ebenfalls mit einer Anzahl von schräg verlaufenden Linien versehen ist. Die Winkel, unter welchen die Linien am durchsichtigen Glied und an den durchsichtigen Platte verlaufen, sind nur ein wenig unterschiedlich. Wenn man den Schieber entlang dem Glied bewegt, dann überdecken sich die Linien der genannten Bestandteile der Schieblehre an bestimmten Orten derselben derart, dass längliche Schatten an diesen Linien entstehen. Aus der Lage dieser Schatten kann man auf die Grösse des gemessenen Abstandes schliessen. Da die Schatten verhältnismässig breit sind und unscharfe Konturen aufweisen, ist dieses Gerät zu einer genauen Messung von Längen ebenfalls ungeeignet.

In DE 3035435 ist eine Schieblehre offenbart, welche einen Balken aus einem undurchsichtigen Material aufweist, welcher mit einer Skala versehen ist. Der Schieber, welcher entlang diesem Balken bewegbar ist, ist aus einem durchsichtigen Material und er trägt Marken zum Ablesen der auf dem Balken abgemessenen Werte. Die Skala am Balken gibt Bereiche von Bestrahlung von Körperteilen an, welche die optimale Röntgenaufnahme ermöglichen sollen.

Keines von diesen vorbekannten Messgeräten ist dazu geeignet, Messwerte auch unter schwachen Lichtverhältnissen genau zu ermitteln.

Die Aufgabe der vorliegenden Erfindung ist die genannten sowie noch weitere Nachteile des Standes der Technik zu beseitigen.

Diese Aufgabe wird beim Gerät der eingangs genannten Gattung erfindungsgemäss so gelöst, wie dies im kennzeichnenden Teil des Patentanspruchs 1 definiert ist.

Nachstehend werden Ausführungsformen der vorliegenden Erfindung anhand der beiliegenden Zeichnungen näher erläutert. Es zeigt:
Fig. 1 in einer Draufsicht das vorliegende Gerät, welches als ein Lineal ausgeführt ist,
Fig. 2 in einer Seitenansicht das Lineal aus Fig. 1, wobei die Richtung dieser
Ansicht mit der Längsrichtung des Lineals zusammenfällt,
Fig. 3 das Prinzip der beim vorliegenden Gerät ausgenützten Lichtsammlung,
Fig. 4 in einer Seitenansicht eine doppelseitige Ausführung des Lineals gemäss Fig. 2,
Fig. 5 in einer Draufsicht eine weitere Ausführung des Lineals, welche einen Anschlag und zwei gegenseitig laufende Skalen aufweist,
Fig. 6 in einer Seitenansicht das Lineal gemäss Fig. 5,
Fig. 7 in einer Draufsicht das vorliegende Gerät, welches als eine Schieblehre ausgeführt ist,
Fig. 8 vergrössert einen Ausschnitt aus Fig. 7,
Fig. 9 einen vertikalen Schnitt, welcher durch den mittleren Bereich des Schiebers der Schieblehre gemäss Fig. 7 bzw. 8 geführt ist,
Fig. 10 einen vertikalen Schnitt, welcher durch eine erste Ausführung des Balkens der Schieblehre gemäss Fig. 7 geführt ist,
Fig. 11 vergrössert einen Ausschnitt aus Fig. 10,
Fig. 12 einen vertikalen Schnitt, welcher durch eine zweite Ausführung des Balkens der Schieblehre gemäss Fig. 7 geführt ist,
Fig. 13 vergrössert einen Ausschnitt aus Fig. 12,
Fig. 14 einen vertikalen Schnitt, welcher durch eine dritte Ausführung des Balkens der Schieblehre gemäss Fig. 7 geführt ist,
Fig. 15 einen vertikalen Schnitt, welcher durch eine vierte Ausführung des Balkens der Schieblehre gemäss Fig. 7 geführt ist,
Fig. 16 einen vertikalen Schnitt, welcher durch einen der Endbereiche des Schiebers der Schieblehre gemäss Fig. 7 geführt ist, und
Fig. 17 in einer Draufsicht und vergrössert Ausschnitte aus Fig. 7 bzw. 8.

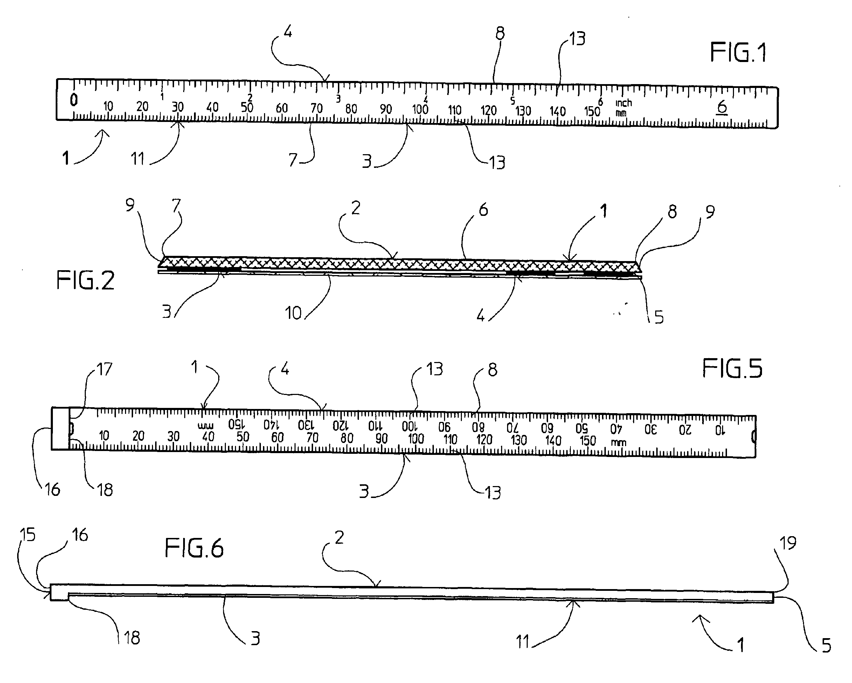

Das in Fig. 1, 2 und 4 bis 6 gezeigte Messgerät ist als ein Lineal ausgeführt. Fig. 1 zeigt das Lineal in einer Draufsicht und Fig. 2 zeigt dieses Lineal in einer Seitenansicht, wobei die Richtung dieser Ansicht mit der Längsrichtung des Lineals zusammenfällt. Dieses Lineal weist zumindest eine Einrichtung 1 zur optischen Anzeige von Messwerten auf. Diese Messeinrichtung 1 umfasst einen Grundkörper 2, welcher aus einem durchsichtigen und lichtsammelnden Material ist. Dieser Grundkörper 2 kann die Form eines Stabes, eines Balkens oder eines Streifens haben. Die Messeinrichtung 1 umfasst ferner eine Anzeigevorrichtung 11, welche zumindest eine Skale 3 aufweist. Im dargestellten Fall umfasst die Anzeigevorrichtung 11 zwei Skalen 3 und 4 und sie ist am Grundkörper 2 angebracht. Die die Skalen 3 und 4 bildenden Elemente sind als lichtreflektierende Flächen ausgebildet und diese Flächen haben im dargestellten Fall die Form von Strichen 13 oder/und Ziffern. Die Skalen 3 und 4 sind auf der vom Beobachter abgewandten bzw. unteren Hauptfläche 5 des Materialstückes 2 angeordnet bzw. ausgebildet. Die dem Beobachter zugewandte bzw. obere Hauptfläche 6 des Materialstücks 2 ist plan und diese Hauptfläche 6 darf sogar glatt sein.

In den hier abgebildeten Fällen hat der Skalenträger 2 die Form eines geradlinig verlaufenden Streifens. Die erste Skale 3 ist einer der Längskanten 7 des Skalenträgers 2 zugeordnet und sie erstreckt sich in einer an sich bekannten Weise entlang dieser Längskante 7. Die zweite Skale 4 ist der gegenüberliegenden Längskanten 8 des Skalenträgers 2 zugeordnet und sie erstreckt sich ebenfalls in der Längsrichtung des Skalenträgers 2. Diese zweite Skale 4 kann zur ersten Skale 3 gegenläufig sein, sie kann eine Zoll-Skale sein usw.. Eine Anschrägung bzw. eine Phase 9 ist in jenem Bereich der Längskante 7 bzw. 8 ausgeführt, welcher sich an die obere bzw. äussere Hauptfläche 6 des Skalenträgers 2 anschliesst.

Die die Skalen 3 und 4 aufweisende untere Hauptfläche 5 des Skalenträgers 2 ist im in Fig. 1 und 2 dargestellten Fall mit einer Schutzschicht 10 versehen, sodass die Skalen 3 und 4 sich zwischen dieser Schutzschicht 10 und dem Träger 2 befinden. Diese Schicht 10 schützt die Skalen 3 und 4 sowie die untere Hauptfläche 5 des Skalenträgers 2 vor allem vor Beschädigung durch mechanische Einwirkungen. Diese Schutzschicht 10 kann als ein Film aus einem Kunststoff ausgeführt sein, welche die Unterseite 5 des Trägers 2 samt den Skalen 3 und 4 überdeckt und versiegelt.

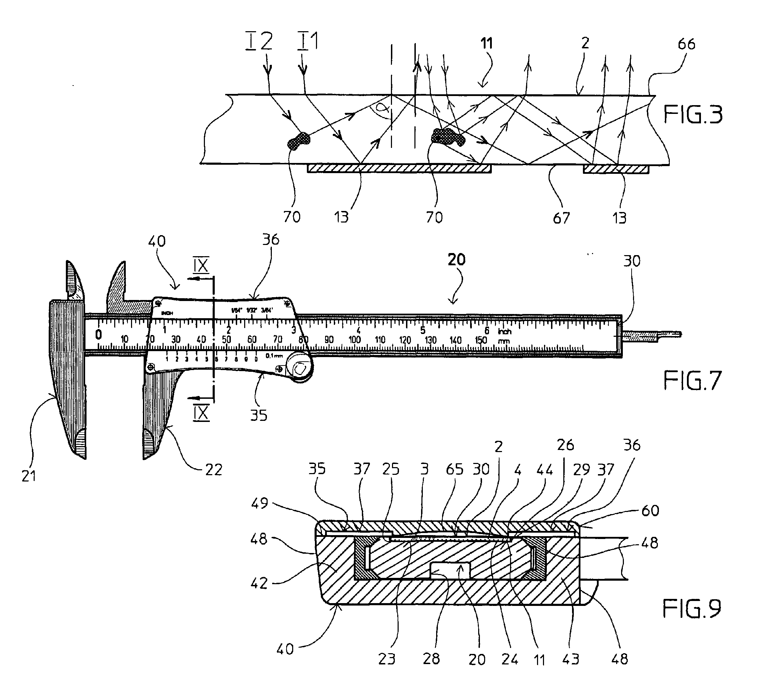

Fig. 3 zeigt prinzipiell, wie die Lichtsammlung im vorliegenden Fall funktioniert. Eine Beschreibung dieses Effektes befindet sich am Schluss dieser Beschreibung.

In Fig. 4 ist eine weitere Ausführung des Lineals in einer Seitenansicht dargestellt, welche zwei streifenförmige Träger 2 und 12 aus lichtsammelndem Material aufweist. Der zweite Träger 12 ist praktisch gleich ausgebildet wie der erste Träger 2. Diese Träger 2 und 12 sind sich mit ihren unteren Hauptflächen 5 zugeordnet. Die oberen bzw. äusseren Hauptflächen 6 der Träger bzw. Grundkörper 2 und 12 sind mit den bereits beschriebenen Phasen 9 versehen. Zwischen den Trägern 2 und 12 befindet sich zumindest eine Anzeigevorrichtung 11, welche die Skalen 3 und 4 aufweist. Damit die Messwerte von den beiden Seiten des Lineales her, d.h. durch die beiden Grundkörper 2 und 12 abgelesen werden können, ist jedem der Grundkörper 2 bzw. 12 eine eigene Anzeigevorrichtung 11 mit den Skalen 3 und 4 zugeordnet. Zwischen diesen Anzeigevorrichtungen 11 und somit auch zwischen den Grundkörpern 2 und 12 kann sich eine undurchsichtige Materialschicht 34 befinden, welche die Skalen 3 und 4 jener Anzeigevorrichtung 11 verdeckt, welche vom Beobachter abgewandt ist.

In Fig. 5 und 6 ist eine Ausführung des Lineals dargestellt, bei dem ein Anschlag 15 von der die Anzeigevorrichtung 11 tragenden bzw. unteren Hauptfläche 5 des Trägers 2 absteht. Dieser Anschlag 15 befindet sich in einem der Endbereiche des Skalenträgers 2 und dieser Anschlag 15 kann beispielsweise die Form eines Quaders, Würfels usw. haben. Die Seitenwände dieses Quaders stehen parallel bzw. senkrecht zu den Flächen des Trägers 2. Eine der Seitenflächen dieses Quaders liegt in einer vertikalen Ebene, in der sich auch die hier liegenden Stirn- bzw. Endfläche 16 des Grundkörpers befindet. Der Nullstrich 17 der in diesem Endbereich beginnenden bzw. sich nach rechts erstreckenden Skale 3 liegt in einem Abstand von der Endfläche 16 des Lineals. Die von der Stirn- bzw. Endfläche 16 abgewandt liegende und quer zur Längsrichtung des Grundkörpers 2 verlaufende Seitenfläche 18 des Vorsprunges 15 ist so angeordnet, dass sie in einer zweiten vertikalen Ebene liegt, in der auch der Nullstrich 17 der genannten ersten Skale 3 liegt. Beim Abmessen eines Abstandes von der Randkante eines Gegenstandes und zwar parallel zu dieser Randkante, kann man die Seitenfläche 18 des Anschlages 15 an der Kante des Gegenstandes anschlagen. Dies erhöht die Präzision der Abmessung des gewünschten Abstandes parallel zur Kante des Gegenstandes.

Die zweite am Träger 2 vorhandene Skale 4 ist im dargestellten Fall zwar ebenfalls metrisch, aber sie ist gegenläufig. Folglich liegt der Anfang bzw. der Null-Strich dieser zweiten Skale 4 im Bereich des zum Anschlag 15 gegenüberliegenden Endes des Trägers 2, wo sich die gegenüberliegende End- bzw. Stirnfläche 19 des Trägers 2 befindet. Im dargestellten Fall liegt der Null-Strich dieser zweiten Skale 4 in einer vertikalen Ebene, in welcher auch die zweite Stirnfläche 19 des Trägers 2 liegt. Diese zweite Skale 4 kann in dem Fall zum Einsatz kommen, wenn man in hohlen Räumen bzw. Winkeln messen will oder wenn der von der Unterseite des Trägers 2 abstehende Anschlag 15 den Benützer des Lineals stört. Im Prinzip kann sich der Null-Strich der zweiten Skale 4 jedoch auch in einem Abstand von der zweiten Endfläche 19 des Trägers 2 befinden. Dieser Abstand hat nämlich einen konstanten Wert, sodass man diesen Wert zur Anzeige der Skale 4 jeweils addieren kann.

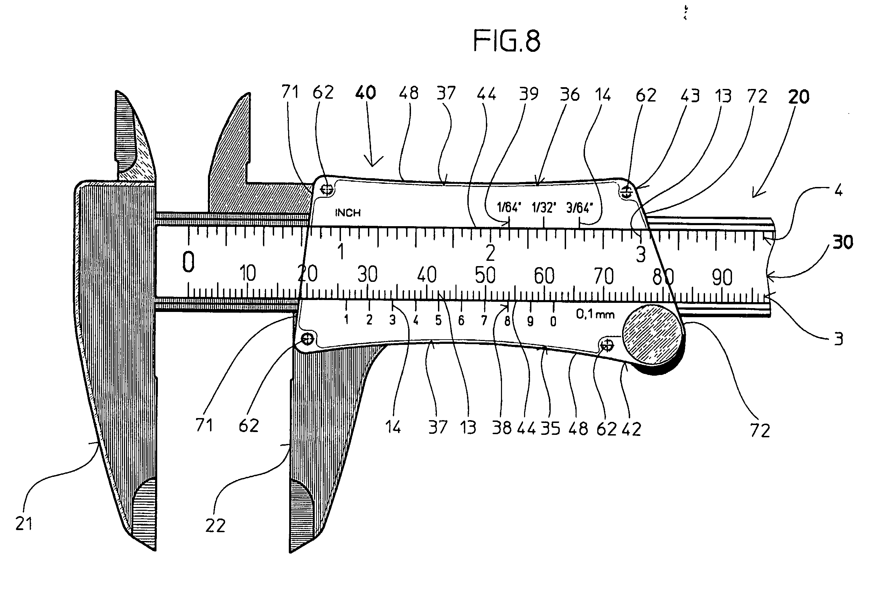

In Fig. 7 bzw. 8 ist ein Messgerät in Draufsicht dargestellt, welches als eine Schieblehre ausgebildet ist. In Fig. 8 ist ein vergrösserter Ausschnitt aus Fig. 7 gezeigt. Die Schieblehre umfasst einen Messbalken 20 sowie einen entlang diesem Balken 20 bewegbaren Schieber 40. Mit dem Messbalken 20 ist ein erster Messchnabel 21 der Schieblehre fest verbunden. Der zweite Messchnabel 22 ist mit dem Grundkörper 41 des Schiebers 40 fest verbunden. Die Messchnabel 21 und 22 sind in einer an sich bekannten Weise ausgeführt und sie können vom Messbalken 20 und vom Schieber 40 nach links oder nach rechts ragen.

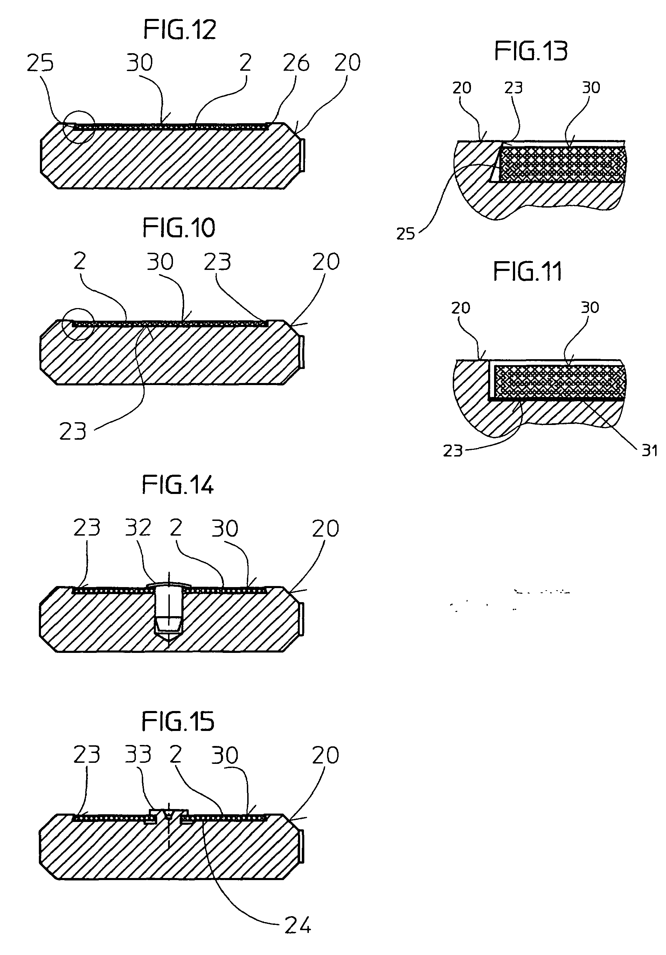

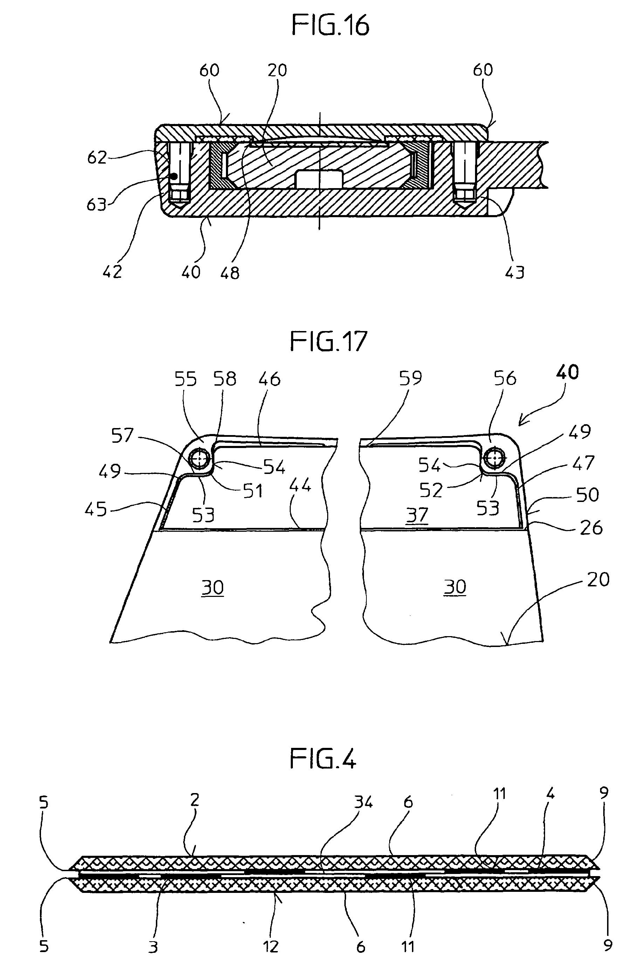

Der Grundkörper 41 des Schiebers 40 weist einen U-förmigen Querschnitt auf (Fig. 9 und 16), wobei der Messbalken 20 zwischen den Innenflächen der U-Schenkel 42 und 43 des Schiebers 40 in einer an sich bekannten Weise spielfrei längsverschiebbar gelagert ist.

In der Oberseite 29 (Fig. 9), d.h. in der dem Beobachter zugewandten Hauptfläche des Grundkörpers 28 des Messbalkens 20 ist eine sich in der Längsrichtung des Balkens 20 erstreckende, flache Mulde 23 vorhanden, welche einen im wesentlichen viereckförmigen Querschnitt hat und einen Boden 24 sowie Seitenwände 25 und 26 aufweist. Die Schieblehre weist ferner eine Messeinrichtung 30 auf, welche im wesentlichen gleich ausgebildet ist wie die Messeinrichtung 1 gemäss Fig. 1 und 2. Die Messeinrichtung 30 hat einen streifenförmigen Grundkörper 2 mit einem viereckförmigen Querschnitt und diese Einrichtung 30 ist in der Mulde 23 des Balkens 20 spielfrei befestigt. Die Anzeigevorrichtung 11 dieser Einrichtung 30 hat ebenfalls zwei Skalen 3 und 4. Eine dieser Skalen 3 befindet sich in der Nähe der einen der Längskanten 25 der Mulde 23 im Grundkörper 28 des Messbalkens 20. Die andere Skale 4 liegt in der Nähe der gegenüberliegenden Seitenwand 26 der Mulde 23. Die äusseren Enden der Striche 13 der Skale 3 bzw. 4 liegen in der Nähe einer der Seiteinwände 25 bzw. 26 der Mulde 23.

Die Messeinrichtung 30 kann mit Hilfe eines Klebestoffes 31 in der Mulde 23 spielfrei gehalten sein, wie dies in Fig. 10 und 11 dargestellt ist. Oder die Seitenwände 25 und 26 der Mulde 23 sind unterschnitten ausgeführt, sodass die Messeinrichtung 30 mit dem viereckförmigen Querschnitt zwischen solchen Seitenwänden 25 und 26 der Mulde 23 spielfrei gehalten ist (Fig. 12 und 13). Es kann jedoch auch Oeffnungen im Grundkörper 2 der Messeinrichtung 30 und im Boden 24 der Balkenmulde 23 geben. Die sich zugeordneten Oeffnungen im Grundkörper 2 und im Balken 20 liegen übereinander und ein Passtift 32 (Fig. 14) geht durch die sich zugeordneten Oeffnungen hindurch. Der Bolzen des Passtiftes 32 ist im Balken 20 verankert. Schliesslich kann ein Stift 33 vom Boden 24 der Mulde 23 abstehen (Fig. 15) und durch eine Oeffnung im Grundkörper 2 hindurchgehen. Die Länge dieses Stiftes 33 ist grösser als die Höhe bzw. Dicke des streifenförmigen Grundkörpers 2. Der sich über dem Grundkörper 2 befindliche Abschnitt des Stiftes 33 ist zur Befestigung der Messeinrichtung 30 im Balken 20 in einer an sich bekannten Weise erweitert.

Die Schieblehre umfasst ferner mindestens eine Vorrichtung zum Ablesen von gemessenen Werten, welche am Schieber 40 angebracht ist. Im dargestellten Fall weist die Schieblehre zwei Ablesevorrichtungen 35 und 36 auf. Je eine dieser Ablesevorrichtungen 35 bzw. 36 ist der Stirnfläche eines der U-Schenkel 42 bzw. 43 zugeordnet (Fig. 9 und 16). Die Ablesevorrichtungen 35 und 36 sind auf den Schieberschenkeln 42 und 43 spielfrei gelagert (Fig. 8 und 17).

Die jeweilige Ablesevorrichtung 35 bzw. 36 weist einen plattenförmigen Grundkörper 37 auf, welcher aus einem durchsichtigen und lichtsammelnden Material ist. Diese Platten 37 dienen als Träger für je eine Markierung 38 bzw. 39 (Fig. 8) der jeweiligen Ablesevorrichtung 35 bzw. 36. Die Markierung 38 bzw. 39 umfasst zumindest ein Element bzw. eine Marke. Das Element bzw. die Elemente der Markierungen 38 und 39 sind als lichtreflektierende Flächen oder Bezirke an der dem Balken 20 zugewandten Seite des Markierungsträgers 37 ausgeführt. Die Markierung 38 bzw. 39 kann als eine einzige Marke oder als eine Skale mit Strichen 14 und/oder mit Symbolen ausgeführt sein. Die Symbole können Zahlen oder Buchstaben sein. Entsprechendes gilt auch für die Skalen 3 und 4 der Messeinrichtung 30. Im in Fig. 7 und 8 dargestellten Fall sind die Markierungen 38 und 39 als Nonius-Skalen ausgeführt.

Der plattenförmige Träger 37 für eine Markierung 38 bzw. 39 hat einen im wesentlichen trapezförmigen Grundriss mit zwei langen Seiten bzw. Kanten 44 und 46 und mit zwei kurzen Seiten bzw. Kanten 45 und 47 (Fig. 17). Die erste lange Kante 44 der Trägerplatte 37 ist geradlinig und sie verläuft parallel zur Seitenfläche 25 bzw. 26 der Mulde 23 im Balken 20. Diese erste Plattenkante 44 befindet sich möglichst nahe an der zugeordneten Skale 3 bzw. 4 des Lineals 30. Die Trägerplatte 37 kann auf dem U-Schenkel 42 bzw. 43 jedoch auch so angeordnet sein, dass sie die zugeordnete Skale 3 bzw. 4 sogar teilweise überlappt. Die Striche 14 der Markierung 38 bzw. 39 enden zweckmässigerweise an der ersten bzw. geradlinigen Längskante 44 der Trägerplatte 37, sodass sie sich in der unmittelbaren Nähe der Striche 13 der dieser Markierung 38 bzw. 39 benachbarten Skale 3 bzw. 4 am Messbalken 20 befinden oder dass sie die Striche 13 der Skalen 3 und 4 überlappen. Eine solche Anordnung der Skalen 3 und 4 und der Markierungen 38 und 39 erlaubt, den eingestellten Wert mit Hilfe einer der Ablesevorrichtungen 38 bzw. 39 vom Lineal 30 schnell und genau abzulesen.

Jene Randpartie der Trägerplatte 37, welche sich an die zweite Längskante 46 dieser Platte 37 anschliesst, liegt auf der Stirnfläche 49 eines der U-Schenkel 42 bzw. 43 des Schiebers 40 auf. Der Verlauf der zweiten Längskante 46 der Trägerplatte 37 ist an den Verlauf der äusseren Seitenfläche 48 des Schiebers 40 angepasst, sodass diese Längskante 46 parallel zur Aussenseite 48 des Schiebers 40 verläuft.

Jene Eckpartien der Trägerplatte 37, in welchen sich die Seitenkanten 45 und 47 derselben mit der zweiten, vom Messbalken 20 entfernt liegenden Längskante 46 dieser Trägerplatte 37 treffen, sind mit je einem Einschnitt 51 bzw. 52 versehen. Der jeweilige Einschnitt 51 bzw. 52 weist zwei praktisch rechtwinklig zueinander stehende Kanten 53 und 54. Die erste Kante 53 verläuft praktisch parallel zur geradlinigen Längskante 44 dieses Trapezes 37. Die zweite Einschnittkante 54 steht praktisch senkrecht zur Längskante 44.

In jenen Eckbereichen der Stirnfläche 49 des U-Schenkels 42 bzw. 43, welche vom Balken 20 abgewandt liegen, ist je eine flache Materialanhäufung bzw. ein flacher Vorsprung 55 bzw. 56 vorhanden. Der Vorsprung 55 bzw. 56 weist zwei plane und praktisch rechtwinklig zueinander stehende Seitenflächen 57 und 58 auf. Die erste dieser Seitenflächen 57 verläuft praktisch parallel zur geradlinigen Kante 44 des Trapezes 37. Die andere Seitenfläche 58 steht praktisch senkrecht dazu. Der Abstand zwischen den senkrechten Seitenflächen 58 der Vorsprünge 55 und 56 ist gleich gross wie der Abstand zwischen den senkrechten Kanten 54 der Einschnitte 51 und 52 in der Trägerplatte 37. Durch die senkrecht stehenden Passflächen 54 und 58 an der Trägerplatte 37 ist die Trägerplatte 37 samt der an dieser ausgeführten Markierung 38 bzw. 39 in der Längsrichtung des Balkens 20 spielfrei fixiert.

Senkrecht zum Balken 20 ist die Lage der Träger 37 der Markierungen 38 und 39 nicht kritisch, sodass der Träger 37 in dieser Richtung nur durch die Reibung zwischen den aufeinander aufliegenden Passflächen 54 und 58 an Ort und Stelle gehalten werden kann. Im dargestellten Fall bilden die Vorsprünge 55 und 56 Eckbereiche einer Umrandung 50, welche sich im äusseren Randbereich der Stirnfläche 49 des jeweiligen U-Schenkles 42 bzw. 43 befindet und deren Abschnitte sich an die drei aussen liegenden Seitenwände 48, 71 und 72 des jeweiligen U-Schenkels 42 bzw. 43 anschliessen. Sonst ist es möglich, einen weiteren Vorsprung 59 auf der Stirnfläche 49 der U-Schenkel 42 und 43 vorzusehen. Dieser Vorsprung 59 befindet sich etwa im mittleren Bereich der vom Balken 20 abgewandten Längskante 46 der Trägerplatte 37 und diese Längskante 46 schlägt an diesem Vorsprung 59 an, was die Lage der Trägerplatte 37 senkrecht zur Länge des Messbalkens 20 definiert und fixiert.

Der Schieber 40 ist ferner mit einer Abdeckplatte 60 versehen, welche sich praktisch über die gesamte Oberseite des Schiebers 40 erstreckt. Diese Abdeckplatte 60 weist einen plattenförmigen Grundkörper auf, welcher aus einem durchsichtigen Material ist und welcher den Stirnflächen der U-Schenkel 42 und 43 zugeordnet ist und diese zumindest im wesentlichen überdeckt. Je ein Aufpresszapfen 62 ist in einer der Eckpartien der Abdeckplatte 60 angeordnet und diese Zapfen 62 stehen von dieser Platte 60 praktisch rechtwinklig ab. In den äusseren Eckbereichen der Stirnflächen des jeweiligen U-Schenkels 42 bzw. 43 ist je eine praktisch zylinderförmige Vertiefung 63 ausgebildet, in welcher der Zapfen 62 festsitzen kann. Der sich zwischen den Schieberschenkeln 42 und 43 befindliche und dem Balken 20 zugewandte Abschnitt der Abdeckplatte 60 weist eine konkave Fläche 65 auf. Der Querschnitt dieser konkaven Fläche 65 hat die Form des Abschnittes des Mantels eines Zylinders, dessen Achse parallel zur Längsachse des Messbalkens 20 verläuft. Die konkave Fläche 65 erstreckt sich nicht nur über die Breite des Messbalkens 20 sondern auch über die Breite der beiden und zu den beiden Seiten des Balkens 20 liegenden Ablesevorrichtungen 35 und 36. Folglich wirkt die konkave Fläche 65 wie eine Linse, welche die Symbole der Skalen 3 und 4 sowie der Markierungen 38 und 39 vergrössert.

Fig. 3 zeigt schematisch, wie die Anzeigevorrichtung 11 funktioniert. Dieser Funktion liegt eine sogenannte LISA-Anordnung zugrunde, welche von der Firma Bayer AG publiziert worden ist. Zur Darlegung dieser Arbeitsweise zeigt Fig. 3 einen Ausschnitt aus der Anzeigevorrichtung 11. Der streifenförmige Träger 2 dieser Vorrichtung 11 ist aus einem hoch transparenten Polymer einer an sich bekannten Art. Der Streifen 2 aus einem solchen Material hat sehr glatte Oberflächen. Im Inneren des Streifenmaterials befinden sich Teilchen 70 aus einem vorteilhaft fluoreszierenden Farbstoff, welche im Polymer verteilt sind.

Beispielsweise der Lichtstrahl I1 dringt aus der umgebenden Luft in das Innere des Trägers 2 durch die obere Hauptfläche 66 dieses Trägers 2 und er gelangt bis zur unteren Hauptfläche 67 dieses Streifens 2, weil keines der Farbstoffteilchen 70 diesem im Wege stand. Dieser Stahl I1 wird von der unteren Hauptfläche 67 total reflektiert und weil sein Grenzwinkel Alpha gegenüber der oberen Hauptfläche 66 klein ist, tritt dieser Strahl I1 durch die obere Hauptfläche 66 wieder in die Umgebungsluft heraus.

Der Lichtstrahl I2 fällt dagegen auf eines der Teilchen 70 des Farbstoffes und er wird von diesem Teilchen 70 zurück zur Oberfläche 66 reflektiert. Der Grenzwinkel Alpha ist bei diesem Strahl jedoch grösser und deswegen wird dieser Lichtstrahl I2 von der Oberfläche 66 in das Innere des Trägers 2 total reflektiert. Wegen dieser Reflexion gelangt dieser Strahl I2 zur unteren Hauptfläche 67, wo er wieder total reflektiert wird, bis er an eine Stelle gelangt, wo der Auftreffwinkel kleiner ist als der Grenzwinkel. Hier tritt dieser Lichtstrahl I2 aus dem Träger 2 heraus. Eine solche Stelle kann beispielsweise eine der Stirnflächen 16 bzw. 19 des Trägers 2 sein.

Die genannte Stelle kann jedoch auch die Fläche einer der Marken 13 der Skale 3 bzw. 4 sein. Dies deswegen, weil das Material der Markierung 13 eine andere optische Dichte hat als Luft. Folglich hat der Grenzwinkel zwischen dem Polymer und dem Material der Marke 13 einen anderen Wert als der Grenzwinkel zwischen dem Polymer und Luft. In dieser Weise entsteht ein Unterschied in der Helligkeit zwischen jenen Stellen am Träger 2, welche mit Marken 13 bedeckt sind und jenen Stellen, wo sich keine Marken 13 befinden. So werden die Marken 13 in der Anzeigevorrichtung 11 ablesbar. Die erwähnten Stellen können auch dadurch entstehen, dass die Marken 13 in der unteren Hauptfläche 67 beispielsweise eingraviert sind. Die Markierungsvorrichtungen 38 und 39 am Schieber 40 funktionieren in gleicher Weise.

Es ist noch eine weitere Ausführung der Schieblehre möglich (nicht dargestellt), bei welcher die Skalen 3 und 4 am Balken 20 in derselben Ebene liegen wie die Skalen 38 und 39 am Schieber 40.

## Patentansprüche

1. Messgerät mit zumindest einer Einrichtung zur optischen Ermittlung von Messwerten, wobei diese Messeinrichtung (1,30) einen Träger (2;37) für zumindest eine Skala (3,4) umfasst, welcher aus einem durchsichtigen Material ist und welcher eine untere Hauptflächen (5) und eine obere Hauptfläche (6) aufweist, **dadurch gekennzeichnet, dass** der Träger (2;37) aus einem lichtsammelden Material, insbesondere aus einem hochtransparenten Polymer, ist, dass die Hauptflächen (5,6) des Trägers (2;37) glatt sind, dass im Inneren des Materials des Trägers (2;37) Teilchen (70) aus einem Farbstoff verteilt sind und dass die die Skala (3,4) bildenden Elemente (13) als lichtreflektierende Flächen auf der unteren Hauptfläche (5) des Trägers ausgebildet sind.

2. Gerät nach Patentanspruch 1, **dadurch gekennzeichnet, dass** zumindest eine der Längskanten (7,8) des Skalenträgers (2) eine Anschrägung bzw. eine Phase (9) aufweist und dass sich diese Phase (9) in jenem Bereich der Längskante (7,8) des Trägers (2) befindet, welcher sich an die obere Hauptfläche (6) des Skalenträgers (2) anschliesst.

3. Gerät nach Patentanspruch 1, **dadurch gekennzeichnet, dass** die die Skala (3,4) aufweisende untere Hauptfläche (5) des Skalenträgers (2) mit einer Schutzschicht (10) versehen ist und dass die Skala (3,4) sich zwischen dieser Schutzschicht (10) und dem Träger (2) angeordnet sind.

4. Gerät nach Patentanspruch 1, **dadurch gekennzeichnet, dass** ein Anschlag (15) am Skalenträger (2) ausgebildet ist, dass dieser Anschlag (15) von der die Skala (3,4) tragenden unteren Hauptfläche (5) des Skalenträgers (2) absteht, dass dieser Anschlag (15) sich in einem der Endbereiche des Skalenträgers (2) befindet, dass die Seitenflächen dieses Anschlags (15) parallel bzw. senkrecht zu den Hauptflächen (5,6) des Trägers (2) stehen, dass eine dieser Seitenflächen (18), welche quer zur Längsrichtung des Skalenträgers (2) verläuft und dem Grundkörper dieses Skalenträgers (2) zugewandt ist, in einer zur Längsrichtung des Skalenträgers (2) stehenden Ebene liegt, in der sich auch der Nullstrich (17) der Skala (3) befindet.

5. Gerät nach Patentanspruch 1, **dadurch gekennzeichnet, dass** zwei streifenförmige Träger (2,12) aus einem lichtsammelndem Material vorgesehen sind, dass sich diese Träger (2,12) mit ihren unteren Hauptflächen (5) zugeordnet sind, dass sich zwischen diesen Trägern (2,12) zumindest eine Anzeigevorrichtung (11) befindet und dass eine undurchsichtige Materialschicht (34) zwischen den Trägern angeordnet sein kann.

6. Gerät nach Patentanspruch 1, welches als eine Schieblehre mit einem Balken (20) und einem entlang diesem Balken bewegbaren Schieber (40) ausgeführt ist, **dadurch gekennzeichnet, dass** die Messeinrichtung (30) auf dem Balken (20) der Schieblehre angebracht ist, dass die Schieblehre ferner mindestens eine Ablesevorrichtung (35;36) aufweist, welche sich am Schieber (40) befindet und neben dem Balken (20) liegt, dass diese Ablesevorrichtung (35,36) einen Träger (37) aus einem lichtsammelden Material, insbesondere aus einem hochtransparenten Polymer umfasst, dass dieser Träger (37) eine untere Hauptfläche (5) und eine obere Hauptfläche (6) aufweist, dass diese Hauptflächen (5,6) sehr glatt sind, dass im Inneren des Materials des Trägers (37) Teilchen (70) aus einem Farbstoff verteilt sind und dass die Ableseelemente (13,14) der Markierung (38,39) dieser Ablesevorrichtung (35,36) als lichtreflektierende Flächen auf der unteren Hauptfläche (5) des Trägers (37) ausgebildet sind.

7. Gerät nach Patentanspruch 6, **dadurch gekennzeichnet, dass** eine flache Mulde (23) in der oberen Hauptfläche (29) des Schieberbalkens (20) ausae-fuhrt ist, welche sich in der Langsrichtung des Balkens (20) erstreckt und Welche einen im wesentlichen viereckförmigen Querschnitt aufweist, dass die Messeinrichtung (30) in dieser Mulde (23) befestigt ist, dass die Ablesevorrichtung (11) dieser Messeinrichtung (30) zwei Skalen (3,4) hat, dass die äusseren Enden der Ableseelemente (13) der Skalen (3,4) dieser Messeinrichtung (30) in der Nähe jeweils einer der Seitenfläche (25,26) der Mulde (23) liegen.

8. Gerät nach Patentanspruch 6, **dadurch gekennzeichnet, dass** der Grundkörper (41) des Schiebers (40) einen U-förmigen Querschnitt aufweist, dass sich der Messbalken (20) zwischen den Innenflächen der U-Schenkel (42,43) des Schiebergrundkörpers (41) befindet, dass eine Ablesevorrichtung (35,36) der Stirnfläche eines der U-Schenkel (42,43) des Schiebergrundkörpers (41) zugeordnet ist, dass der Skalenträger (37) der Ablesevorrichtung (35,36) einen plattenförmigen Grundkörper (37) aufweist, und dass die Ableseelemente (13,14) der Markierung (38,39) der Ablesevorrichtung (35,36) an der dem Balken (20) zugewandten Seite des Markierungsträgers (37) angeordnet sind

9. Gerät nach Patentanspruch 8, **dadurch gekennzeichnet, dass** der plattenförmige Träger (37) einen trapezförmigen Grundriss aufweist, dass die längere Grundkante (44) des Trapezes (37) geradlinig ist und parallel zur Seitenfläche (25,26) der Mulde (23) im Balken (20) verläuft oder diese Seitenfläche (25,26) teilweise überlappt, und dass die Striche (14) der Markierung (38,39) der Ablesevorrichtung (35,36) an der längeren Grundkante (44) der Trägerplatte (37) enden.

10. Gerät nach Patentanspruch 9, **dadurch gekennzeichnet, dass** jene Randpartie der Trägerplatte (37), welche sich an die kürzere Grundkante (46) des Trapezes (37) anschliesst, auf der Stirnfläche (49) eines der U-Schenkel (42,43) des Schiebers (40) liegt, dass jene Eckbereiche der Stirnfläche (29) des V-Schenkels (42;43), welche vom Balken (20) abgewandt liegen, mit je einem Vorsprung (55,56) versehen sind, dass die einander zugewandten Flächen (58) dieser Materialanhäufungen (55,56) als Passflächen ausgebildet sind, dass die vom Balken (20) abgewandt liegenden Eckpartien des Markierungsträgers (37) viereckförmige Einschnitte (51,52) aufweisen und dass die praktisch parallel zueinander verlaufende Kanten (54) dieser Einschnitte an den Passflächen (58) der Vorsprünge (55,56) aufliegen.

11. Gerät nach Patentanspruch 6, **dadurch gekennzeichnet, dass** der Schieber (40) eine Abdeckplatte (60) aus einem durchsichtigen Material aufweist, dass diese Abdeckplatte (60) den Stirnflächen (49) der V-Schenkel (42,43) zugeordnet ist, dass der sich zwischen den Schieberschenkeln (42,43) befindliche und dem Balken (20) zugewandte Abschnitt der Abdeckplatte (60) eine konkave Fläche (65) aufweist, dass der Querschnitt dieser konkaven Fläche (65) die Form des Abschnittes des Mantels eines Zylinders hat, dessen Achse parallel zur Längsachse des Messbalkens (20) verläuft, und dass diese konkave Fläche (65) sich nicht nur über die Breite des Messbalkens (20) sondern auch über die Breite der beiden Ablesevorrichtungen (35,36) erstreckt.

12. Gerät nach Patentanspruch 1, **dadurch gekennzeichnet, dass** die Skala (3) einer der Längskanten (7) des Trägers (2) zugeordnet ist, dass eine zweite Skala (4) vorgesehen ist, welche der gegenüberliegenden Längskante (8) des Trägers (2) zugeordnet ist, und dass diese zweite Skala (4) zur ersten Skala (3) gegenläufig ist, sodass der Nullstrich (19) der zweiten Skala (4) sich am gegenüberliegenden Ende des Skalenträgers (2) befindet.

13. Gerät nach Patentanspruch 7, **dadurch gekennzeichnet, dass** die Messeinrichtung (30) mit Hilfe eines Klebstoffes (31) in der Mulde (23) gehalten ist, oder dass die Seitenwände (25,26) der Mulde (23) unterschnitten sind, oder dass es Öffnungen sowohl im Grundkörper (2) der Messeinrichtung (30) als auch im Boden (24) der Balkenmulde (23) gibt und dass es zumindest einen Passstift (32) gibt, welcher durch diese Öffnungen hindurchgeht, oder dass ein Stift (33)vom Boden (24) der Mulde (23) absteht, welcher durch eine Öffnung im Grundkörper (2) der Messeinrichtung (30) hindurchgeht.

14. Gerät nach Patentanspruch 1, **dadurch gekennzeichnet, dass** die sich im Inneren des Streifenmaterials befindlichen Teilchen (70) aus einem fluoreszierenden Farbstoff sind, welche im Polymer verteilt sind.

## Claims

1. Measuring instrument with at least one equipment for the optical determination of measured values, whereby this measuring equipment (1,30) contains a carrier (2;37) for at least one scale (3,4), which is of a transparent material and which shows a lower primary area (5) and an upper primary area (6), **characterized in that** the carrier (2;37) is of a light collecting material, in particular of a high-transparent polymer, that the primary areas (5,6) of the carrier (2;37) are smooth, that in the interior of the material of the carrier (2;37) are distributed corpuscles (70) of a dye and that the elements forming the scale (3,4) (13) are shaped as light reflecting surfaces on the lower primary area (5) of the carrier.

2. Device according to patent claim 1, **characterized in that** at least one of the longitudinal edges (7,8) of the scale carrier (2) shows a pitch and/or a phase (9) and that this phase (9) is **in that** field of the longitudinal edge (7,8) of the carrier (2) which connects itself to the upper primary area (6) of the scale carrier (2).

3. Device according to patent claim 1, **characterized in that** the lower primary area (5) of the scale carrier (2) showing the scale (3,4) is put on a protective coating (10) and that the scale (3,4) is between this protective coating (10) and the carrier (2).

4. Device according to patent claim 1, **characterized in that** an assault (15) is provided at the scale carrier (2), that this assault (15) stands off from the lower primary area (5) of the scale carrier (2) carrying the scale (3,4), that this assault (15) is in one of the end fields of the scale carrier (2), that the facets of this assault (15) stand parallel and/or normal to the primary areas (5,6) of the carrier (2), that one of these facets (18), which perpendicular to the longitudinal direction of the scale carrier (2) runs and is turned to the basic body of this scale carrier (2), in a standing level for the longitudinal direction of the scale carrier (2) in which is also the zero line (17) of the scale (3).

5. Device according to patent claim 1, **characterized in that** two strip-shaped carriers (2,12) are provided from a light collecting material, that these carriers (2,12) are allocated themselves with their lower primary areas (5), that there is at least a device of a display (11) between these carriers (2,12) and that a non-transparent material layer (34) is between the carriers.

6. Device according to patent claim 1, which is exported as a slide gauge with a beam (20) and as a slide movable along this beam (40), **characterized in that** the measuring equipment (30) is attached on the beam (20) of the slide gauge, that the slide gauge shows further at least a reading appliance (35;36), which is at the slide (40) and next to the beam (20), that this reading appliance (35,36) has a carrier (37) of a light collecting material, in particular of a high-transparent polymer, that this carrier (37) shows a lower primary area (5) and an upper primary area (6), that these primary areas (5,6) are smooth, that in the interior of the material of the carrier (37) corpuscles (70) of a dye are distributed and that the reading elements (13,14) of the marking (38,39) of this reading appliance (35,36) are shaped as bright reflecting faces on the lower primary area (5) of the carrier.

7. Device according to patent claim 6, **characterized in that** a flat hollow (23) is in the upper primary area (29) of the slide beam (20), which extends in the longitudinal direction of the beam (20) and which shows a basically square-shaped cross-section, that the measuring equipment (30) is attached in this hollow (23), that the reading appliance (11) of this measuring equipment (30) has two scales (3,4), and that the external ends of the reading elements (13) of the scales (3,4) of this measuring equipment (30) lie near each one of the facet (25,26) of the hollow (23).

8. Device according to patent claim 6, **characterized in that** the basic body (41) of the slide (40) shows a U-shaped cross-section, that the measurement beam (20) is between the internal surfaces of the U thighs (42,43) of the slide basic body (41), that a reading appliance (35,36) is assigned to the front end of one of the U thighs (42,43) of the slide basic body (41), that the scale carrier (37) of the reading appliance (35,36) shows a platy-shaped basic body (37), and that the reading elements (13,14) of the marking (38,39) of the reading appliance (35,36) are placed at this side of the marking carrier (37) which is turned to the beam (20).

9. Device according to patent claim 8, **characterized in that** the platy-shaped carrier (37) shows a trapezoidal-shaped outline, that the longer basic edge (44) of the trapeze (37) is rectilinear and the longer basic edge (44) of the trapeze (37) runs parallel to the facet (25,26) of the hollow (23) in the beam (20) or the longer basic edge (44) of the trapeze (37) is overlapping this facet (25,26) in part, and that the lines (14) of the marking (38,39) of the reading appliance (35,36) end at the longer basic edge (44) of the carrier plate (37).

10. Device according to patent claim 9, **characterized in that** that edge lot of the carrier plate (37) connecting the shorter basic edge (46) of the trapeze (37) lies on the front end (49) of one of the U-thighs (42,43) of the slide (40), that those edge fields of the front end (29) of the U-thigh (42;43), which lie turned away of the beam (20), provided are with each a nose (55,56), that the faces turned to each other (58) of these material accumulations (55,56) are shaped as mating surfaces, that the edge lots of the marking carrier (37) being averted from the beam (20) show square-shaped incisions (51,52) and that the virtually parallel to each other running edges (54) of these incisions at the mating surfaces (58) of the noses (55,56) are available.

11. Device according to patent claim 6, **characterized in that** the slide (40) shows a protecting plate (60) of a transparent material, that this protecting plate (60) is related (42,43) to the end faces (49) of the U-thighs, that the section of the protecting plate (60) being between the slide thighs (42,43) and turned to the beam (20) the coping stone (60) shows a concave area (65), that the cross-section of this concave area (65) has the form of the section of the cleading of a cylinder, whose axis runs parallelly to the longitudinal axis of the measuring beam (20), and that this concave area (65) extends not only over the width of the measuring beam (20) but also over the width of the two reading appliances (35,36).

12. Device according to patent claim 1, **characterized in that** the scale (3) is attached to one of the longitudinal edges (7) of the carrier (2), that a second scale (4) is provided being attached to the opposite longitudinal edge (8) of the carrier (2), and that this second scale (4) is counterrunning to the first scale (3) so that the zero line (19) of the second scale (4) is found at the opposite end of the scale carrier (2).

13. Device according to patent claim 7, **characterized in that** the measuring equipment (30) is held by an adhesive (31) in the hollow (23), or that the sidewalls (25,26) of the hollow (23) are under-cut, or that there are openings both in the basic body (2) of the measuring equipment (30) and in the bottom (24) of the beam hollow (23) and that there is at least a dowel pin (32) which passes through these openings, or that a pin (33) stands off the bottom (24) of the hollow (23), which one passes through an opening in the basic body (2) of the measuring equipment (30).

14. Device according to patent claim 1, **characterized in that** the corpuscles (70) being in the interior of the stripe material are of a fluorescent dye, which ones are distributed in the polymer.

## Revendications

1. Appareil de mesure doté avec au minimum un dispositif de mesure optique de valeurs, ce dispositif (1, 30) comportant un support (2, 37) pour au moins une règle graduée (3, 4), lequel support est constitué d'un matériau transparent et présente une face principale inférieure (5) et une face principale supérieure (6), **caractérisé en ce que** le support (2, 37) est constitué d'un matériau capteur de lumière, en particulier d'un polymère hautement translucide, les faces principales (5, 6) du support (2; 37) étant lisses, des particules d'une matière colorante étant dispersées à l'intérieur du matériau du support (2, 37), et les éléments (13) constitutifs de la règle graduée (3, 4) formant des surfaces capteuses de lumière sur la face principale inférieure (5) du support.

2. Appareil selon la revendication 1 **caractérisé en ce que** au minimum une des arêtes longitudinales (7, 8) du support de règle graduée (2) présente un chanfrein ou une facette en biseau (9), cette facette en biseau étant localisée sur la partie de l'arête longitudinale (7,8) du support (2) qui rejoint la face principale supérieure (6) de la règle graduée (2).

3. Appareil selon la revendication 1 **caractérisé en ce que** la face principale inférieure (5) du support de règle graduée (2) sur laquelle se trouve la règle graduée (3,4) est recouverte d'une couche protectrice (10), la règle graduée (3, 4) étant disposée entre cette couche protectrice (10) et le support (2).

4. Appareil selon la revendication 1 **caractérisé en ce que** le support de règle graduée (2) présente une butée (15), cette butée (15) étant en retrait par rapport à la face principale inférieure (5) du support de règle graduée (2) supportant la règle graduée (3, 4), cette butée se trouvant dans l'une des zones d'extrémité du support de règle graduée (2), les faces latérales de cette butée (15) étant parallèles à ou à la verticale des faces principales (5, 6) du support (2), l'une de ces faces latérales (18), dirigée transversalement par rapport à l'axe longitudinal du support de règle graduée (2) et orientée vers le corps principal de ce support de règle graduée (2), reposant sur un plan disposé dans l'axe longitudinal du support de règle graduée (2), et le zéro mécanique (17) de la règle graduée (3) se trouvant également sur ce plan.

5. Appareil selon la revendication 1 **caractérisé en ce qu'**il présente deux supports en forme de bandes (2, 12) constituées d'un matériau capteur de lumière, les faces principales inférieures (5) de ces supports (2, 12) étant coordonnées l'une à l'autre, au minimum un dispositif de d'affichage (11) se trouvant entre ces supports (2, 12), et une couche de matériau (34) opaque étant disposée entre les supports.

6. Appareil selon la revendication 1 conçu comme un pied à coulisse avec une barre (20) et d'un vernier (40) mobile coulissant le long de cette barre, **caractérisé en ce que** l'instrument de mesure (30) est disposé sur la barre du pied à coulisse, ce pied à coulisse présentant par ailleurs au minimum un dispositif de lecture (35, 36), lequel se trouve sur le vernier et à proximité de la barre (20), ce dispositif de lecture comprenant un support (37) constitué d'un matériau capteur de lumière, en particulier d'un polymère hautement translucide, ce support (37) présentant une face principale inférieure (5) et une face principale supérieure (6), ces faces principales (5, 6) étant très lisses, des particules (70) d'une matière colorante étant dispersées à l'intérieur du matériau du support (37), et les éléments de lecture (13, 14) du marquage (38, 39) de ce dispositif de lecture (35, 36) formant des surfaces capteuses de lumière sur la face principale inférieure (5) du support (37).

7. Appareil selon la revendication 6 **caractérisé en ce que** la face principale supérieure (29) de la barre du pied à coulisse (20) présente une rainure (23) plate qui s'étire longitudinalement à la barre (20) et qui présente une coupe essentiellement rectangulaire, l'instrument de mesure (30) étant fixé dans cette rainure (23), le dispositif de lecture (11) de cet instrument de mesure (30) disposant de deux règles graduées (3, 4), chacune des extrémités extérieures des éléments de lecture (13) des règles graduées (3, 4) de cet instrument de mesure (30) étant située à proximité d'une des faces latérales (25, 26) de la rainure (23).

8. Appareil selon la revendication 6 **caractérisé en ce que** le corps principal (41) du vernier (40) présente une coupe en U, la barre de mesure (20) étant située entre les faces intérieures des branches en U (42, 43) du corps principal du vernier, un dispositif de lecture (35, 36) étant associé à la face frontale d'une des branches en U (42, 43) du corps principal du vernier (41), le support de règle graduée (37) du dispositif de lecture (35, 36) présentant un corps principal (37) en forme de plateau, les éléments de lecture (13, 14) du marquage (38, 39) du dispositif de lecture (35, 36) étant disposés sur la face du support de marquage (37) orientée vers la barre (20).

9. Appareil selon la revendication 8 **caractérisé en ce que** le support (37) en forme de plateau présente un plan trapézoïdal, la base la plus longue (44) du trapèze (37) étant rectiligne et orientée parallèlement à la face latérale (25, 26) de la rainure (23) ménagée dans la barre (20) ou chevauchant partiellement cette face latérale, et les traits (14) de marquage (38, 39) du dispositif de lecture (35, 36) se terminent sur la base la plus longue (44) du plateau du support (37).

10. Appareil selon la revendication 8 **caractérisé en ce que** la zone marginale du plateau du support (37) qui rejoint la base la plus courte (46) du trapèze (37) est située sur la face frontale (49) d'une des branches en U (42, 43) du vernier (40), chacune des zones d'angle de la face frontale (49) de la branche en V (42, 43) opposées la barre (20) présentant une saillie (55, 56), les surfaces orientées l'une vers l'autre (58) de ces accumulations de matière (55, 56) étant conçues comme des surfaces d'ajustage, les zones d'extrémité du support de marquage (37) opposées à la barre (20) présentant des entailles rectangulaires (51, 52), et les arêtes (54) de ces entailles, quasiment parallèles, prenant appui sur les surfaces d'ajustage (58) des saillies (55, 56).

11. Appareil selon la revendication 6 **caractérisé en ce que** le vernier (40) présente une plaque de recouvrement (60) constituée d'un matériau transparent, la plaque de recouvrement (60) étant associée aux faces frontales (49) des branches en V (42, 43), la section de la plaque de recouvrement (60) située entre les branches du vernier (42, 43) et orientée vers la barre (20) présentant une surface (65) concave, la coupe de cette surface (65) concave ayant la forme d'une section de chemise de cylindre et son axe étant dirigé parallèlement à l'axe longitudinal de la barre de mesure (20), et cette surface (65) concave s'étirant non seulement sur toute la largeur de la barre de mesure (20), mais aussi sur toute la largeur des deux dispositifs de lecture (35, 36).

12. Appareil selon la revendication 1 **caractérisé en ce que** la règle graduée (3) est associée à l'une des arêtes longitudinales (7) du support (2), une seconde règle graduée (4) étant associée à l'arête longitudinale opposée (8) du support (2), cette seconde règle (4) graduée dans le sens opposé à celui de la premier règle graduée (3) de telle sorte que le zéro mécanique (19) de la seconde règle graduée (4) est située à l'extrémité opposée du support de règle graduée (2).

13. Appareil selon la revendication 7 **caractérisé en ce que** le dispositif de mesure (30) est maintenu dans la rainure (23) à l'aide d'une colle (31) ou **en ce que** les cloisons latérales (25, 26) de la rainure (23) sont évidées, ou **en ce que** des ouvertures sont ménagées tant dans le corps principal (2) du dispositif de mesure (30) que dans le plancher (24) de la rainure de la barre (23) et qu'au moins un goujon d'ajustage (32) traverse ces ouvertures ou qu'un goujon (33) dépasse de la rainure (23) après avoir traversé une des ouvertures ménagées dans le corps principal (2) du dispositif de mesure (30).

14. Appareil selon la revendication 1 **caractérisé en ce que** les particules (70) présentes à l'intérieure du matériau des bandes et dispersées dans le polymère sont constituées d'un colorant fluorescent.
